# FASCICULE DE BREVET EUROPEEN

(11) **EP 1 357 789 B1**
(45) Date de publication et mention de la délivrance du brevet: **17.08.2005**
(21) Numéro de dépôt: 02701400.0
(22) Date de dépôt: 04.02.2002
(51) Int. Cl.: A01K 55/00

(54) **PROCEDE ET SYSTEME DE GESTION ET DE SURVEILLANCE DE RUCHES**
VERFAHREN UND ANLAGE ZUR VERWALTUNG UND ÜBERWACHUNG VON BIENENSTÖCKEN
METHOD AND SYSTEM FOR MANAGING AND MONITORING BEEHIVES

(30) Priorité: 05.02.2001 FR 0101510
(43) Date de publication de la demande: 05.11.2003
(73) Titulaire: Humirel, 31023 Toulouse (FR); Universite de Toulouse II, 31058 Toulouse (FR); Vincent Michaud Investissements SA, 64290 Gan (FR)
(72) Inventeur: MERCIER, Jean-Jacques, F-31300 TOULOUSE (FR); VAL, Thierry, F-31700 BEAUZELLE (FR); CAMPO, Eric, F-31180 ROUFFIAC TOLOSAN (FR); PEYRARD, Fabrice, F-31200 TOULOUSE (FR); ALLIER, Jean-François, F-31023 TOULOUSE (FR); SEUBE, Alain, F-31023 TOULOUSE (FR); MICHAUD, Vincent, F-64290 GAN (FR)
(74) Mandataire: L'Helgoualch, Jean
(86) Numéro de dépôt international: PCT/FR2002/000417
(87) Numéro de publication internationale: WO 2002/062133

(56) Documents cités:
- EP-A- 0 631 266
- DE-U- 29 608 489
- US-A- 5 914 672
- DATABASE WPI Week 8846 Derwent Publications Ltd., London, GB; AN 1988-328359 XP002176574 & SE 8 701 262 A (STARK), 27 septembre 1988 (1988-09-27)
- DATABASE WPI Week 9613, Derwent Publications Ltd., London, GB; AN 1996-127352, XP002176575 & RU 2 038 778 C (KURKS POLY) 09 Juillet 1995
- DATABASE WPI Week 9123 Derwent Publications Ltd., London, GB; AN 1991-169861 XP002176576 & SU 1 588 344 A (RYBOCHKIN), 30 août 1990 (1990-08-30)

## Description

La présente invention concerne un procédé de gestion et de surveillance à distance du fonctionnement d'un ensemble de ruches réparties sur une zone déterminée, ainsi qu'un système spécialement adapté à un tel procédé.

On connaît de nombreuses techniques permettant de gérer et surveiller à distance des installations fixes ou mobiles, notamment dans le cadre de processus industriels où les données à traiter sont parfaitement définies. Ces techniques font intervenir par exemple des réseaux constitués d'une pluralité de capteurs reliés entre eux ou à une station centrale par liaison filaire ou par télétransmission au moyen d'émetteurs - récepteurs. Ces réseaux conviennent bien au traitement de données industrielles.

Dans certains domaines particuliers, les systèmes connus sont inadaptés en raison des données à traiter ou des structures des réseaux à mettre en place. Par exemple, dans le domaine de l'apiculture, divers travaux et études ont été faits pour observer les structures des ruches et améliorer les méthodes liées à la récolte du miel, notamment des procédés pour l'enfumage des ruches ou pour l'extraction du miel, mais l'entretien et la surveillance des ruches ainsi que la récolte du miel nécessitent toujours une présence humaine constante.

Le modèle d'utilité DE 296 08 489 propose un système destiné à collecter des informations à partir de ruches disposées à distance. Selon ce système, chaque ruche comprend des capteurs reliés à un micro-ordinateur qui mémorise les données des capteurs et les transmet par liaison téléphonique à intervalles prédéterminés à un poste distant. Un tel système n'est cependant pas satisfaisant car la présence d'un micro-ordinateur dans chaque ruche impose des contraintes matérielles importantes pour isoler et protéger l'appareillage et son alimentation en énergie. De plus, une ligne téléphonique doit être affectée à chaque ruche, c'est-à-dire dans un environnement agressif perturbant le bon fonctionnement de la ligne. Enfin, le système est unidirectionnel.

Or les recherches effectuées par la demanderesse ont montré qu'il est possible de gérer et surveiller efficacement un ensemble de ruches en relevant à intervalles définis et programmables certains paramètres déterminés, ce qui permet d'éviter à l'apiculteur de devoir se déplacer à de multiples reprises jusqu'à ses ruches pour en surveiller l'évolution, pour les entretenir et extraire le miel. Ainsi il a été démontré que l'activité passée, présente et future d'une ruche peut être suivie efficacement en relevant à intervalles définis et programmés les paramètres de température, d'humidité, de poids de la ruche et de bruit dans la ruche. De plus, d'autres paramètres extérieurs tels que la vitesse du vent, la pression atmosphérique, l'ensoleillement, les conditions de pluviométrie ou d'autres paramètres tels que le comportement de la reine et les variations de population dans la ruche peuvent aussi être pris en considération pour apprécier l'évolution prévisible de l'activité de la ruche.

La présente invention a précisément pour objet un procédé selon la revendication 1, permettant la gestion et la surveillance à distance d'un ensemble de ruches réparties sur une zone déterminée et contenant des capteurs de mesures physiques utiles notamment en apiculture, ainsi qu'un système selon la revendication 4, spécialement adapté à un tel procédé.

Le système de gestion des ruches de l'invention permet non seulement d'assurer le suivi de l'activité pour permettre à l'apiculteur d'intervenir efficacement, mais aussi la gestion prévisionnelle de l'activité des ruches.

Le système conforme à la présente invention présente l'avantage d'être bidirectionnel, ce qui permet non seulement de collecter des données provenant des capteurs par l'intermédiaire de chaque station de base, mais aussi d'adapter le programme de transmission en fonction des résultats du traitement des données et de la période de l'année, et par exemple d'adapter le rythme des transmissions à l'activité des ruches.

Les stations secondaires sont constituées par des ruches contenant les capteurs appropriés, placées à proximité de la station de base avec laquelle elles communiquent, tandis que cette dernière contient de préférence seulement les moyens de traitement et de transmission des signaux.

Les moyens de transmission utilisés dans l'invention sont constitués par des émetteurs-récepteurs placés dans les stations secondaires et permettant de transmettre les données collectées par les capteurs, et des émetteurs - récepteurs placés dans la station de base afin de capter les données et de les transmettre au poste principal. De plus, la station de base comprend des moyens pour stocker en mémoire les données pour les traiter et les transmettre ultérieurement au poste principal muni d'un logiciel adapté, ou à un terminal mobile, tel que téléphone mobile, par exemple, qui peut remplir la fonction de poste principal.

Suivant une forme avantageuse de réalisation de l'invention, les stations secondaires peuvent être interrogées à partir du terminal mobile et les résultats transmis à ce même terminal mobile.

Comme indiqué ci-dessus, des analyses automatiques de données reçues sur le poste principal ou sur le terminal mobile permettent de prédire et d'anticiper le comportement des abeilles et des ruches, et de planifier à l'avance les actions à mener par l'utilisateur.

Le système de l'invention peut aussi être avantageusement utilisé pour déclencher une alarme en cas de vol ou de déplacement non autorisé d'une ou plusieurs ruches, et pour localiser, en permanence et à distance, l'emplacement géographique de ruches. A cet effet, la station de base comprend des moyens pour transmettre des alarmes au poste principal.

Les capteurs utilisés dans la présente invention sont sensibles à au moins un phénomène physique, et on utilise des capteurs sensibles à la température, des capteurs sensibles à l'humidité, des capteurs sensibles au poids, des capteurs sensibles au bruit, et des capteurs sensibles au déplacement. Ces capteurs permettent, en fonctionnement, de générer un signal électrique représentatif du phénomène physique, qui peut ensuite être traité, comparé à un seuil et/ou transmis par des moyens appropriés.

On utilise une pluralité de capteurs mesurant la température, l'humidité, le poids, le bruit et le mouvement, dans chacune des stations secondaires. Suivant une forme de réalisation, ces capteurs sont placés uniquement dans les stations secondaires, tandis qu'un ensemble de capteurs identiques servant de références aux mesures, est dans la station de base pour mesurer les mêmes paramètres sensibles uniquement à l'environnement. Suivant une variante, les capteurs de mesure sont placés dans les stations secondaires et dans la station de base, celle-ci étant alors elle aussi une ruche réelle dans le cas de l'application à l'apiculture.

Les capteurs utilisés dans l'invention peuvent être des capteurs de température tels que des thermistances, des sondes platine, des circuits intégrés sur silicium, des capteurs d'humidité tels que des capteurs capacitifs ou des capteurs résistifs, des capteurs de poids tels que des pesons capacitifs ou à jauge de contrainte, des capteurs de bruit tels que des microphones ou des electrets, et des capteurs de déplacement, tels que relais à bille, accéléromètres ou encore transpondeurs. Pour faciliter la gestion prévisionnelle des ruches, on dispose aussi des capteurs mesurant la population des ruches par comptage des entrées et des sorties d'abeilles, ainsi qu'un capteur à l'extérieur et à proximité de la ruche de base pour mesurer la pluviométrie avec des pluviomètres, l'ensoleillement avec des capteurs de type optoélectronique, ou la vitesse du vent, avec des anémomètres ou des systèmes thermosensibles.

Un traitement de l'ensemble des paramètres ainsi recueillis permet de définir et de suivre une représentation paramétrique de l'activité de la ruche, et en transmettant à distance ces paramètres, par des moyens appropriés, on évite tout déplacement superflu de l'apiculteur et on peut aussi optimiser la miellée.

L'analyse de ces données permet aussi de prévoir l'évolution de l'activité de la ruche et de calculer par exemple des tendances en fonction de la variation de poids rapportée à une différence de temps, ou en combinant les mesures de poids et les mesures simultanées des températures externe et interne des ruches, ou encore en combinant la mesure du bruit dans la ruche et la mesure du poids pour en déduire l'imminence d'un essaimage. Ces calculs peuvent être faits par des moyens appropriés, par exemple grâce à un micro-processeur situé dans la ruche ou station secondaire, placé à distance, dans le poste principal ou le terminal mobile.

Il devient ainsi possible, conformément à la présente invention, non seulement de transmettre régulièrement à distance les données résultant des mesures effectuées à intervalles réguliers, ou suivant un programme déterminé, mais aussi d'interpréter ces données et d'agir en conséquence sur le programme de mesures, de prévoir des phénomènes imminents (sur quelques minutes) ou plus lointains (quelques jours), et éventuellement de déclencher des alarmes en fonction de ces prévisions. Ces phénomènes qu'il est possible de prévoir peuvent être par exemple la surpopulation de la ruche pouvant conduire à un essaimage non contrôlé, ou l'atteinte par une maladie évolutive affectant le comportement des abeilles, ou la saturation des capacités de récolte du miel ou de pollen, ou encore la périodicité de réalimentation des nourrisseurs de la ruche.

Les moyens de transmission entre les stations secondaires et la station de base peuvent être constitués par une liaison filaire, ou, de préférence, par ondes électromagnétiques. Les transmissions entre la station de base et le poste principal à distance se font par tout moyen approprié, mais de préférence par liaison téléphonique filaire ou hertzienne, par exemple par liaison GSM ou satellite, ou par réseau de type internet.

Les moyens de communication et de traitement des signaux utilisés dans l'invention permettent de faire en sorte que le poste principal, ou le terminal mobile qui en tient lieu, soit activé (alerté) à partir d'une station de base si un paramètre ou une combinaison déterminée des paramètres mesurés est hors échelle par rapport aux valeurs de référence. On utilise de préférence un système de communication half-duplex permettant les échanges de données entre le poste principal et les ruches de base.

D'une manière générale, les stations secondaires sont situées à quelques dizaines de mètres de la station de base à laquelle elles sont raccordées, tandis que la station de base peut être à plusieurs kilomètres, voire à plusieurs milliers de kilomètres du poste principal.

Afin de limiter la consommation d'énergie, les émetteurs placés dans les stations secondaires émettent les données provenant de leurs capteurs de manière périodique, à intervalles définis et programmables à distance par l'utilisateur. Suivant une variante les données sont émises à intervalles réguliers, par exemple avec une périodicité de 5 à 8 minutes, et en décalant les périodes d'une ruche à l'autre. Ce décalage temporel des périodes d'émission des différentes ruches permet d'éviter que deux ruches n'émettent au même moment et brouillent le signal reçu par la station de base.

Suivant une forme préférentielle de réalisation, chaque station de base n'est mise en fonctionnement que pendant des durées suffisantes à la réception des paramètres des capteurs transmis par les stations secondaires, afin d'économiser l'énergie disponible. Les durées de fonctionnement peuvent être programmées, ou déclenchées à distance par le poste principal.

Les caractéristiques et avantages de la présente invention apparaîtront plus en détail dans la description qui suit, en référence au dessins annexé, qui représente une représentation schématique d'un ensemble de stations formant un système conforme à l'invention.

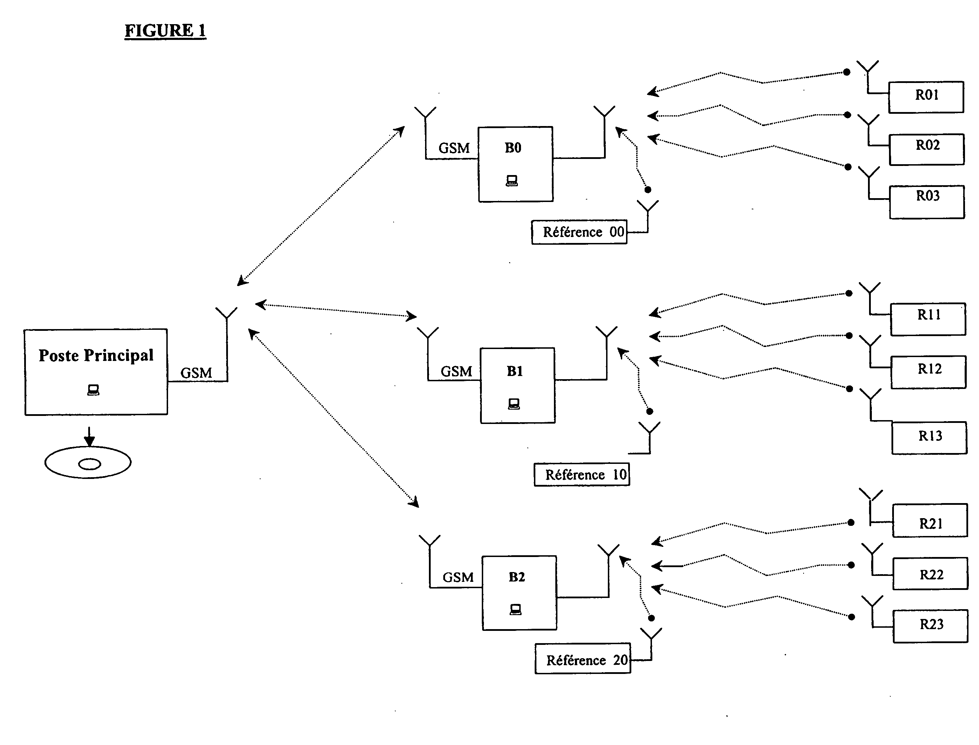

La Figure 1 représente schématiquement trois ruches R1, R2 et R3 constituant des stations secondaires, comportant des capteurs de poids, d'humidité, de température, de bruit et de déplacement, ainsi qu'un émetteur, émettant à intervalles définis et programmables les paramètres provenant des capteurs.

La station de base, B0, constitue une pseudo-ruche qui reçoit les paramètres transmis par chacune des ruches R01, R02 et R03. La station B0 contient aussi une mémoire M0 non volatile dans laquelle peuvent être stockés les paramètres provenant des ruches, ainsi qu'un émetteur lui permettant d'adresser ces paramètres au poste principal P.

Comme l'indique la Figure 1, le système comprend aussi plusieurs autres ruches R11, R12 et R13, connectées de la même manière à une station de base B1, ainsi qu'un troisième groupe de ruches R21, R22 et R23 connectées à la station de base B2. Le système global peut être complété de cette façon jusqu'à plusieurs milliers de stations de base.

Chaque station de base B comporte non seulement des moyens de réception des informations transmises à intervalles définis et programmables par les ruches R mais aussi des moyens de contrôle de la réception basés sur la notion de parité généralisée, afin de vérifier qu'elle s'est faite correctement, des moyens de contrôle de la cohérence des paramètres transmis, ainsi que des moyens de calcul pour cumuler si nécessaire les paramètres reçus avant de les transmettre vers le poste principal P.

La cohérence des paramètres provenant des capteurs est vérifiée par comparaison avec des valeurs de référence fournies par les capteurs de références situés dans la station de base et préalablement mises en mémoire, ou transmises à partir du poste principal P.

Les stations de base B sont alimentées en énergie par une batterie électrique dont la recharge peut être assurée, au moins partiellement, par des panneaux solaires, tous ces éléments étant de type usuel. Une simple batterie est généralement suffisante pour assurer pendant plusieurs mois l'alimentation des ruches R, de leurs capteurs et de l'émetteur qu'elles contiennent.

Les modules émetteurs-récepteurs placés dans les ruches R envoient les données provenant des capteurs après que la station de Base B en ait émis l'ordre, suite à la programmation des horaires d'interrogations de ruches définies par l'utilisateur. L'acquisition des données se fait de façon séquentielle. Ceci permet d'assurer une bonne fiabilité de la transmission des paramètres tout en économisant l'énergie.

Chaque station de base B n'est mise en fonctionnement que pendant des durées suffisantes à la réception des paramètres des capteurs transmis par les ruches R, afin d'économiser l'énergie disponible. Les périodes de fonctionnement sont déclenchées à distance soit manuellement par l'utilisateur depuis le poste principal ou un terminal mobile, soit de façon automatique, aux horaires pré-programmés, définis et modifiables par l'utilisateur depuis son poste principal ou son terminal mobile.

Le fonctionnement de la station de base B peut se faire suivant cinq modes : automatique, transfert de résultats, manuel, alarme et configuration.

En mode automatique, le système assure le déclenchement des mesures et le stockage des données aux horaires pré-programmés;

En mode transfert de résultats, on effectue l'envoi des résultats des mesures acquises durant la période, suite à une requête du poste principal.

En mode manuel, on déclenche les mesures et l'envoi instantané des résultats vers le demandeur (poste principal ou terminal mobile).

En mode alarme, des alarmes pré-programmées sont envoyées vers le poste principal ou le terminal mobile quand un paramètre ou une combinaison de paramètres est en dehors des valeurs spécifiées.

Enfin, le mode configuration permet la réception des paramètres de configuration afin que le poste principal puisse gérer, de façon autonome, le système de ruches dont il a la charge.

## Revendications

1. Procédé de gestion et de surveillance à distance d'un ensemble de ruches (R01 - R23), réparties sur une zone déterminée, **caractérisé en ce que** l'on collecte des données de température, d'humidité, de poids, de bruit et de mouvement par l'intermédiaire de capteurs placés dans les ruches dites stations secondaires, on transmet ces données à une station de base (B0, B1, B2) à intervalles de temps définis et programmables à distance, on stocke les données dans la station de base (B0, B1, B2) et on les transmet à un poste principal (P) placé à distance.

2. Procédé selon la revendication 1, **caractérisé en ce que** les données sont transmises à la station de base (B0, B1, B2) par les stations secondaires à intervalles définis et programmables à distance.

3. Procédé selon la revendication 1, **caractérisé en ce que** la station de base (B0, B1, B2) est activée à partir du poste principal(P).

4. Système de gestion et de surveillance de ruches (R01 - R23) **caractérisé en ce qu'**il comprend une pluralité de ruches dites stations secondaires et une station de base (B0, B1, B2) réparties sur une zone déterminée, des capteurs sensibles à la température, l'humidité, le poids, le bruit et le mouvement placés dans les stations, un poste principal (P) placé à distance, et des moyens de transmission entre les stations secondaires et la station de base (B0, B1, B2) et entre cette dernière et le poste principal (P).

5. Système selon la revendication 4, **caractérisé en ce que** les capteurs sont placés dans les stations secondaires.

6. Système selon la revendication 4, **caractérisé en ce que** les capteurs sont placés dans les stations secondaires et dans la station de base (B0, B1, B2).

7. Système selon l'une quelconque des revendications 4 à 6, **caractérisé en ce que** les stations secondaires sont constituées par des ruches (R01 - R23).

8. Système selon la revendication 7, **caractérisé en ce que** des capteurs de mesure de population sont placés dans les ruches (R01 - R23) et des capteurs de mesure de pluviométrie d'ensoleillement, de pression atmosphérique et de vitesse du vent sont placés près de la station de base (B0, B1, B2).

9. Système selon l'une quelconque des revendications 4 à 8, **caractérisé en ce que** les moyens de transmission entre les stations secondaires et la station de base (B0, B1, B2) sont constitués par des émetteurs-récepteurs placés dans les stations secondaires permettant de transmettre les données collectées par les capteurs, et des émetteurs - récepteurs placés dans la station de base (B0, B1, B2) afin de capter les données et de les transmettre au poste principal (P).

10. Système selon l'une quelconque des revendications 4à 9, **caractérisé en ce que** la station de base (B0, B1, B2) comprend des moyens pour stocker en mémoire les données pour les traiter et les transmettre ultérieurement au poste principal(P).

11. Système selon l'une quelconque des revendications 4 à 10, **caractérisé en ce que** la station de base (B0, B1, B2) comprend des moyens pour transmettre des alarmes au poste principal (P).

## Claims

1. A method of remote management and monitoring of a collection of hives (R01 - R23), distributed over a specified area, **characterized in that** temperature, humidity, weight, noise and movement data are gathered by way of sensors placed in the hives as secondary stations, these data are transmitted to a base station (B0, B1, B2) at remotely programmable defined time intervals, the data are stored in the base station (B0, B1, B2) and are transmitted to a main set (P) placed remotely.

2. The method according to claim 1, **characterized in that** the data are transmitted to the base station (B0, B1, B2) by the secondary stations at remotely programmable defined intervals.

3. The method according to claim 1, **characterized in that** the base station (B0, B1, B2) is activated from the main set.

4. A system for managing and monitoring hives (R01 - R23), **characterized in that** it comprises a plurality of hives as secondary stations and a base station (B0, B1, B2) that are distributed over a specified area, sensors responsive to temperature, humidity, weight, noise and movement placed in the stations, a main set (P) placed remotely, and means of transmission between the secondary stations and the base station (B0, B1, B2) and between the latter and the main set (P).

5. The system according to claim 4, **characterized in that** the sensors are placed in the secondary stations.

6. The system according to claim 4, **characterized in that** the sensors are placed in the secondary stations and in the base station (B0, B1, B2).

7. The system according to any one of claims 4 to 6, **characterized in that** the secondary stations consist of hives (R01 - R23).

8. The system according to claim 7, **characterized in that** sensors for measuring population are placed in the hives (R01 - R23)and sensors for measuring rainfall, sunshine, atmospheric pressure and wind speed are placed near the base station (B0, B1, B2).

9. The system according to any one of claims 4 to 8, **characterized in that** the means of transmission between the secondary stations and the base station (B0, B1, B2) consist of transceivers placed in the secondary stations making it possible to transmit the data gathered by the sensors, and transceivers placed in the base station (B0, B1, 82) so as to pick up the data and transmit them to the main set (P).

10. The system according to any one of claims 4 to 9, **characterized in that** the base station (B0, B1, B2) comprises means of memory storage of the data so as to process them and transmit them subsequently to the main set (P).

11. The system as claimed in any one of claims 4 to 10, **characterized in that** the base station (B0, B1, B2) comprises means for transmitting alarms to the main set (P).

## Patentansprüche

1. Verfahren zur Fernverwaltung und -überwachung einer Anlage von Bienenstöcken (R01-R23), die über einen bestimmten Bereich verteilt sind, **dadurch gekennzeichnet, dass** Temperatur-, Feuchtigkeits-, Gewichts-, Geräusch- und Bewegungs-Daten mittels Sensoren, die in den als Sekundärstationen bezeichneten Bienenstöcken angeordnet sind, erfasst werden, die Daten in definierten und fernprogrammierbaren Zeitintervallen an eine Basisstation (B0, B1, B2) übertragen werden, die Daten in der Basisstation (B0, B1, B2) gespeichert werden und an eine entfernt angeordnete Hauptstelle (P) übertragen werden.

2. Verfahren nach Anspruch 1, **dadurch gekennzeichnet, dass** die Daten in definierten und fernprogrammierbaren Intervallen von den Sekundärstationen an die Basisstation (B0, B1, B2) übertragen werden.

3. Verfahren nach Anspruch 1, **dadurch gekennzeichnet, dass** die Basisstation (B0, B1, B2) ausgehend von der Hauptstelle (P) aktviertwird.

4. System zur Verwaltung und Überwachung von Bienenstöcken (R01-R23), **dadurch gekennzeichnet, dass** dieses eine Vielzahl von als Sekundärstationen bezeichnete Bienenstöcke und eine Basisstation (B0, B1, B2), die über einen bestimmten Bereich verteilt sind, gegenüber Temperatur, Feuchtigkeit, Gewicht, Geräusche und Bewegungen empfindliche Sensoren, die in den Stationen angeordnet sind, eine entfernt angeordnete Hauptstelle (P) sowie Mittel zu Übertragung zwischen den Sekundärstationen und der Basisstation (B0, B1, B2) und zwischen Letzterer und der Hauptstelle (P) umfasst.

5. System nach Anspruch 4, **dadurch gekennzeichnet, dass** die Sensoren in den Sekundärstationen angeordnet sind.

6. System nach Anspruch 4, **dadurch gekennzeichnet, dass** die Sensoren in den Sekundärstationen und in der Basisstation (B0, B1, B2) angeordnet sind.

7. System nach einem der Ansprüche 4 bis 6, **dadurch gekennzeichnet, dass** die Sekundärstationen aus Bienenstöcken (R01 - R23) bestehen.

8. System nach Anspruch 7, **dadurch gekennzeichnet, dass** Messsensoren für die Population in den Bienenstöcken (R01 - R23) und Messsensoren zur Messung des Niederschlags, der Sonneneinstrahlung, des Atmosphärendrucks und der Windgeschwindigkeit in der Nähe der Basisstation (B0, B1, B2) angeordnet sind.

9. System nach einem der Ansprüche 4 bis 8, **dadurch gekennzeichnet, dass** die Mittel zur Übertragung zwischen den Sekundärstationen und der Basisstation (B0, B1, B2) aus Sendern/Empfängern bestehen, die in den Sekundärstationen angeordnet sind und die Übertragung der von den Sensoren erfassten Daten ermöglichen, und aus Sendern/Empfängern gebildet sind, die in der Basisstation (B0, B1, B2) angeordnet sind, um die Daten zu empfangen und an die Hauptstelle (P) weiterzusenden.

10. System nach einem der Ansprüche 4 bis 9, **dadurch gekennzeichnet, dass** die Basisstation (B0, B1, B2) Mittel zum Speichern der Daten in einem Speicher umfasst, um diese zu verarbeiten und letztendlich an die Hauptstelle (P) weiterzusenden.

11. System nach einem der Ansprüche 4 bis 10, **dadurch gekennzeichnet, dass** die Basisstation (B0, B1, B2) Mittel zum Übertragen von Alarmmeldungen an die Hauptstelle (P) umfasst.
